# EUROPÄISCHE PATENTANMELDUNG

(11) **EP 4 644 134 A1**
(43) Veröffentlichungstag der Anmeldung: **05.11.2025**
(21) Anmeldenummer: 25170244.5
(22) Anmeldetag: 14.04.2025
(51) Int. Cl.: B60C 11/03, B60C 11/04, B60C 11/12

(54) **FAHRZEUGREIFEN**

(30) Priorität: 03.05.2024 DE 102024204129
(71) Anmelder: Continental Reifen Deutschland GmbH, 30175 Hannover (DE)
(72) Erfinder: Kristen, Florian, 30175 Hannover (DE); Lutz, André, 30175 Hannover (DE)
(74) Vertreter: Continental Corporation

(57) **Zusammenfassung**

Die Erfindung betrifft einen Fahrzeugreifen, mit einem Laufstreifen (2) mit einem eingebrachten Profil, Seitenwänden und Wulstbereichen, wobei das Profil durch Umfangsrillen (4a1, 4a2) gebildet wird, die in Umfangsrichtung um den Fahrzeugreifen verlaufen und ausgehend von einer Laufstreifenoberfläche (2a) in radialer Richtung (R) über eine Profiltiefe (T3) in den Laufstreifen (2) hineinragen, wobei die Umfangsrillen (4a1, 4a2) jeweils mindestens zwei verengte Bereiche (Bv) und mindestens zwei aufgeweitete Bereiche (Ba) aufweisen, die sich innerhalb der jeweiligen Umfangsrille (4a) in radialer Richtung (R) über die Profiltiefe (T3) abwechseln, so dass sich die jeweilige Umfangsrille (4a) über ihren gesamten Umfang in radialer Richtung (R) alternierend in den verengten Bereichen (Bv) in Querrichtung (Q) verengt und in den aufgeweiteten Bereichen (Ba) in Querrichtung (Q) aufweitet.

## Beschreibung

Die Erfindung betrifft einen Fahrzeugreifen gemäß dem Oberbegriff des Anspruches 1.

Es sind Fahrzeugreifen bekannt, deren Profilierung in der Regel Umfangsrillen und ggf. lateral bzw. axial verlaufende Querrillen aufweisen. Diese Rillen können je nach Bedarf mit Einschnitten (sipes) oder Taschen-Einschnitten (pocket sipes) erweitert werden, um die Nässeeigenschaften des Fahrzeugreifens zu verbessern. Die Einschnitte dienen dabei der Erzeugung oder der Bereitstellung eines zusätzlichen Hohlraums im Fahrzeugreifen, um Wasser aufnehmen zu können, und werden daher auch als hohlraumerzeugende Rillen (void-generating grooves, VGG) bezeichnet. Solche hohlraumerzeugenden Rillen sind beispielsweise in DE 10 2020 204 226 A1, DE 10 2020 212 560 A1 oder US 20220402310 A1 beschrieben.

In DE 60108972 T2 bzw. US 2006088618 A1 ist zudem beschrieben, dass im Laufstreifen in axialer Richtung verlaufende hohlraumerzeugende Rillen vorgesehen sind, bei denen sich radial übereinanderliegend verengte Abschnitte und senkrecht zur radialen Richtung aufgeweitete Abschnitte abwechseln. Weiterhin wechseln sich die verengten Abschnitte und die senkrecht zur radialen Richtung aufgeweiteten Abschnitte auch in axialer Richtung ab, so dass eine gitterförmige Abfolge über die Ausdehnung der in axialer Richtung ausgedehnten hohlraumerzeugenden Rillen entsteht.

Weiterhin ist bekannt, dass insbesondere bei Fahrzeugreifen für Nutzfahrzeuge ein Rillenvolumen der Umfangsrillen und/oder der Querrillen (insofern vorhanden) geringer gewählt wird, um Anforderungen an den Abrieb und den Rollwiderstand zu erfüllen. Dadurch verringert sich ebenfalls die Menge bzw. das Volumen an Hohlräumen (Void, Negativanteil des Profils) in der Profilierung des Fahrzeugreifens. Es gibt also einen Zielkonflikt zwischen einerseits der Bereitstellung von ausreichend Hohlräumen zur Wasseraufnahme, um die Nässeeigenschaften zu verbessern, und andererseits der Verringerung der Hohlräume zur Verbesserung von Abriebs- und Rollwiderstandsanforderungen. Insbesondere zum Ende des Reifenlebens, wenn die Profilierung bereits größtenteils abgefahren ist und das Rillenvolumen sich noch weiter verringert hat, wird das Problem der Nässeeigenschaften deutlich verschärft.

Der folgenden Erfindung liegt die Aufgabe zugrunde, einen Fahrzeugreifen anzugeben, bei dem sich ein geringer Rollwiderstand ergibt und gleichzeitig ein optimiertes Fahrverhalten bei Nässe erreicht werden kann.

Diese Aufgabe wird durch einen Fahrzeugreifen gemäß Anspruch 1 gelöst. Die Unteransprüche geben bevorzugte Weiterbildungen an.

Erfindungsgemäß ist demnach ein Fahrzeugreifen, insbesondere für ein Nutzfahrzeug, mit einem Laufstreifen mit einem eingebrachten Profil, Seitenwänden und Wulstbereichen, vorgesehen, wobei das Profil insbesondere durch Umfangsrillen gebildet wird, die in Umfangsrichtung um den Fahrzeugreifen verlaufen und ausgehend von einer Laufstreifenoberfläche in radialer Richtung über eine Profiltiefe in den Laufstreifen hineinragen,
wobei die Umfangsrillen jeweils mindestens zwei verengte Bereiche und mindestens zwei aufgeweitete Bereiche aufweisen, die sich innerhalb der jeweiligen Umfangsrille in radialer Richtung über die Profiltiefe abwechseln, so dass sich die jeweilige Umfangsrille über ihren gesamten Umfang in radialer Richtung alternierend in den verengten Bereichen in Querrichtung verengt und in den aufgeweiteten Bereichen in Querrichtung aufweitet.

In dem erfindungsgemäßen Fahrzeugreifen werden also die Umfangsrillen derartig modifiziert, dass mindestens zwei oder mehrere aufgeweitete Bereiche radial über die Umfangsrille verteilt werden. Die radial dazwischenliegenden zusätzlichen Engstellen bzw. verengten Bereiche bewirken vorteilhafterweise, dass sich die radiale Deformation des Fahrzeugreifens weiter verringert, wodurch sich ebenso der Rollwiderstand verringert. Weiterhin wird die Problemstellung des sog. Stone Trappings (Einschluss von Steinen) durch die zusätzlichen Engstellen entschärft, da eine oder mehrere weitere Barriere(n) zum Rillengrund hin vorliegen. Da sich die Hohlräume bzw. das Negativprofil (Void) innerhalb der Umfangsrille verringert, wird auch die Abriebsleistung weiter erhöht, gleichzeitig durch die auch weiterhin vorhandenen Hohlräume in den aufgeweiteten Bereichen aber auch die Aufnahme von Wasser ermöglicht, so dass die Fahreigenschaften bei Nässe auch weiterhin auf einem sicheren Niveau bleiben.

Vorzugsweise ist weiterhin vorgesehen, dass sich die verengten Bereiche und die aufgeweiteten Bereiche innerhalb der jeweiligen Umfangsrille auch in Umfangsrichtung abwechseln, so dass sich die jeweilige Umfangsrille in Umfangsrichtung mit einer Abschnittslänge alternierend in den verengten Bereichen in Querrichtung verengt und in den aufgeweiteten Bereichen in Querrichtung aufweitet.

Durch die auch in Umfangsrichtung versetzen Engstellen wird die radiale Deformation weiter verringert, wodurch sich auch der Rollwiderstand weiter verringert. Da sich auch das Volumen der Hohlräume (Void) weiter verringert, wird auch die Abriebsleistung weiter erhöht, bei auch weiterhin sicherer Nässeperformance.

Vorzugsweise ist weiterhin vorgesehen, dass die Abstandslänge zwischen den sich abwechselnden verengten Bereichen und den aufgeweiteten Bereichen zwischen 2cm und 3cm beträgt, wobei die Abstandslänge über den Umfang der Umfangsrille konstant ist oder variiert. Auf diese Weise ist eine einfache Herstellung gegeben und durch die Wahl der Abstandslänge sind auch gewisse Fahreigenschaften und Geräuscheigenschaften flexibel einstellbar. Vorzugsweise ist weiterhin vorgesehen, dass die verengten Bereiche der jeweiligen Umfangsrille durch verengte Hauptabschnitte gebildet werden, die jeweils in Querrichtung über eine verengte Breite und in radialer Richtung über eine verengte Tiefe ausgedehnt sind, wobei
- die verengte Breite zwischen 1mm bis 3mm beträgt, und/oder
- die verengte Tiefe zwischen 3mm und 8mm beträgt.

Bei derartigen Abmessungen der verengten Bereiche ist eine ausreichende Abstützwirkung des Profils gegeben, so dass beim jeweiligen Abnutzungsgrad gute Abroll- und Abriebeigenschaften gegeben sind. Gleichzeitig ist über die Rillentiefe noch genügend Platz in radialer Richtung für die aufgeweiteten Bereiche, um Hohlräume für verbesserte Nässeeigenschaften bereitzustellen.

Vorzugsweise ist weiterhin vorgesehen, dass die verengten Breiten jedes verengten Hauptabschnittes innerhalb einer Umfangsrille, und vorzugsweise auch über alle Umfangsrillen, jeweils identisch sind, und/oder die verengten Tiefen jedes verengten Hauptabschnittes innerhalb einer Umfangsrille, und vorzugsweise auch über alle Umfangsrillen, jeweils identisch sind. Auf diese Weise ist eine einfache Herstellung und auch eine einfache Abstimmung der Fahreigenschaften gewährleistet, was weiterhin dadurch unterstützt wird, dass die verengten Hauptabschnitte innerhalb derselben Umfangsrille miteinander fluchten.

Vorzugsweise ist weiterhin vorgesehen, dass die verengten Bereiche zumindest einiger Umfangsrillen ferner durch verengte Übergangsabschnitte gebildet werden, über die die jeweilige Umfangsrille ausgehend von der Laufstreifenoberfläche radial nach innen in den Laufstreifen hineinragt, wobei die verengten Übergangsabschnitte in radialer Richtung eine geringere Ausdehnung aufweisen als die verengten Hauptabschnitte, und wobei die verengten Übergangsabschnitte vorzugsweise mit den verengten Hauptabschnitten innerhalb derselben Umfangsrille fluchten. Auf diese Weise wird am Übergang zu der Laufstreifenoberfläche ein entsprechend verengter Übergangsbereich bereitgestellt, über den die radial alternierende Abfolge von verengten und aufgeweiteten Bereichen fortgesetzt wird, um die noch fehlende Distanz zur Laufstreifenoberfläche geeignet zu überbrücken.

Vorzugsweise ist weiterhin vorgesehen, dass die aufgeweiteten Bereiche der jeweiligen Umfangsrille durch aufgeweitete Hauptabschnitte gebildet werden, die jeweils in Querrichtung über eine aufgeweitete Breite und in radialer Richtung über eine aufgeweitete Tiefe ausgedehnt sind, wobei
- die aufgeweitete Breite an mindestens einem Scheitelpunkt innerhalb des aufgeweiteten Hauptabschnittes einen maximalen Wert annimmt, der zwischen 5mm und 10mm, insbesondere zwischen 6mm und 8mm beträgt, und/oder
- die aufgeweitete Tiefe zwischen 5mm und 13mm beträgt.

Bei diesen maximalen Werten für die aufgeweitete Breite und den Werten der aufgeweiteten Tiefe des jeweiligen aufgeweiteten Hauptabschnittes wird je nach Anforderung und Art des Fahrzeugreifens eine optimierte Wasseraufnahme durch ein großes Hohlraum-Volumen gewährleistet, um die Nässeeigenschaften ab dem jeweiligen Abnutzungsgrad zu verbessern.

Vorzugsweise ist weiterhin vorgesehen, dass die aufgeweiteten Breiten jedes aufgeweiteten Hauptabschnittes innerhalb einer Umfangsrille jeweils identisch sind, und/oder die aufgeweiteten Tiefen jedes aufgeweiteten Hauptabschnittes innerhalb einer Umfangsrille jeweils identisch sind. Auf diese Weise ist eine einfache Herstellung und auch eine einfache Abstimmung der Fahreigenschaften gewährleistet.

Vorzugsweise ist weiterhin vorgesehen, dass die aufgeweiteten Bereiche zumindest einiger Umfangsrillen ferner durch aufgeweitete Übergangsabschnitte gebildet werden, beispielsweise durch trichterförmig aufgeweitete Übergangsabschnitte, über die die jeweilige Umfangsrille ausgehend von der Laufstreifenoberfläche radial nach innen in den Laufstreifen hineinragt, wobei die aufgeweiteten Übergangsabschnitte in radialer Richtung eine geringere Ausdehnung aufweisen als die aufgeweiteten Hauptabschnitte.

Auf diese Weise wird am Übergang zu der Laufstreifenoberfläche ein Übergangsbereich bereitgestellt, über den die alternierende Abfolge von verengten und aufgeweiteten Bereichen fortgesetzt wird und dabei die noch fehlende Distanz zur Laufstreifenoberfläche überbrückt wird.

Vorzugsweise ist weiterhin vorgesehen, dass die Ausdehnung in radialer Richtung der aufgeweiteten Bereiche innerhalb einer Umfangsrille in Summe mehr als 50% einer Gesamttiefe der jeweiligen Umfangsrille betragen. Dadurch wird je nach Abnutzungsgrad und freigelegten aufgeweiteten Abschnitten in der jeweiligen Umfangsrille ein ausreichend großer Hohlraum (Void, Negativanteil) im Profil bereitgestellt, um die Nässeeigenschaften zu optimieren.

Vorzugsweise ist weiterhin vorgesehen, dass der Fahrzeugreifen mindestens vier Umfangsrillen aufweist, insbesondere mindestens zwei axial innere Umfangsrillen und mindestens zwei axial äußere Umfangsrillen, wobei die verengten Bereiche und die aufgeweiteten Bereiche zwischen zumindest einigen der in Querrichtung benachbarten Umfangsrillen, insbesondere zwischen einer der axial inneren Umfangsrillen und einer der axial äußeren Umfangsrillen, in radialer Richtung versetzt zueinander liegen. Auf derselben radialen Höhe wechseln sich also in Querrichtung auch über benachbarte Querrillen die verengten und die aufgeweiteten Bereiche ab, wodurch sich die Nässeeigenschaften weiter verbessern, da beim jeweiligen Abnutzungsgrad stets ein umfänglicher Hohlraum zur Aufnahme von Wasser zur Verfügung steht.

Dies kann weiter dadurch verbessert werden, dass die inneren Umfangsrillen jeweils in radialer Richtung eine identische alternierende Verteilung der verengten Bereiche und der aufgeweiteten Bereiche aufweisen, und/oder die äußeren Umfangsrillen jeweils in radialer Richtung eine identische alternierende Verteilung der verengten Bereiche und der aufgeweiteten Bereiche aufweisen. Bei einer solchen symmetrischen Anordnung der jeweiligen Abschnitte bzw. Bereiche um den Reifenzenit ergibt sich auch eine gleichmäßige axiale Verteilung von umfänglich freiliegenden Hohlräumen, was die Fahreigenschaften bei Nässe weiter verbessert.

In den Zeichnungen zeigen:
- Fig. 1: einen Fahrzeugreifen mit mehreren Umfangsrillen in einem Querschnitt;
- Fig. 2: eine Draufsicht auf den Fahrzeugreifen gemäß Fig. 1 mit Umfangsrillen gemäß einer ersten Ausführungsform;
- Fig. 3: eine Detailansicht einer Umfangsrille aus Fig. 2;
- Fig. 4: perspektivische Ansicht einer Umfangsrille in dem Fahrzeugreifen gemäß Fig. 1 in einer zweiten Ausführungsform; und
- Fig. 5: Schnittansichten durch die Umfangsrille gemäß Fig. 4.

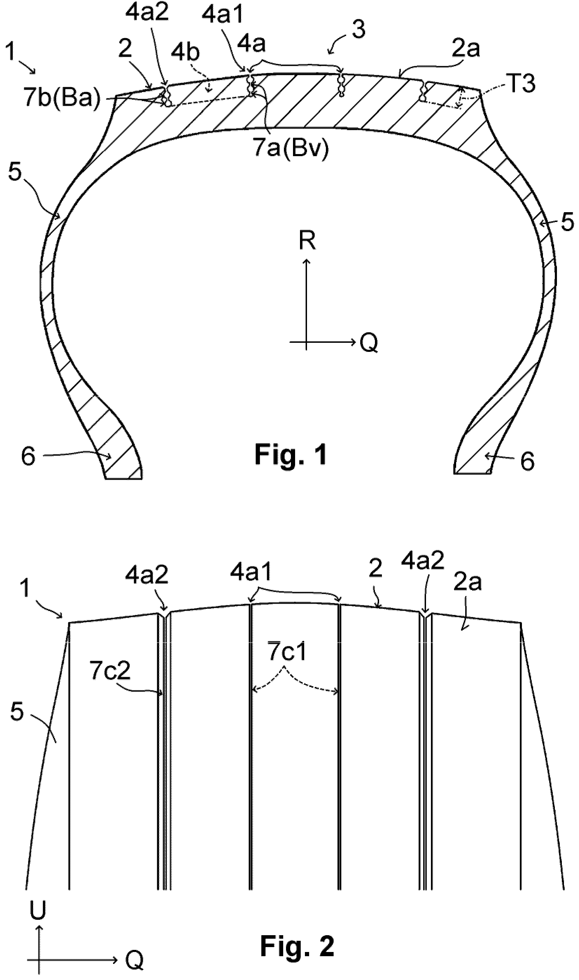

Figur 1 zeigt einen Fahrzeugreifen 1, insbesondere für Nutzfahrzeuge, mit einem Laufstreifen 2, ein in den Laufstreifen 2 eingebrachtes Profil 3 mit einer Profiltiefe T3, wobei das Profil 3 zumindest Umfangsrillen 4a und je nach Fahrzeugreifen 1 auch Querrillen 4b aufweist, Seitenwänden 5 und Wulstbereichen 6. Die Umfangsrillen 4a sind dabei unterteilt in zwei axial innere Umfangsrillen 4a1 und zwei schulterseitige bzw. axial äußere Umfangsrillen 4a2, die das Profil 3 in Profilblockreihen unterteilen. Der Aufbau wird durch entsprechende Verstärkungseinlagen (Karkasse, Wulstkern, etc., nicht dargestellt) wie allseits bekannt verstärkt.

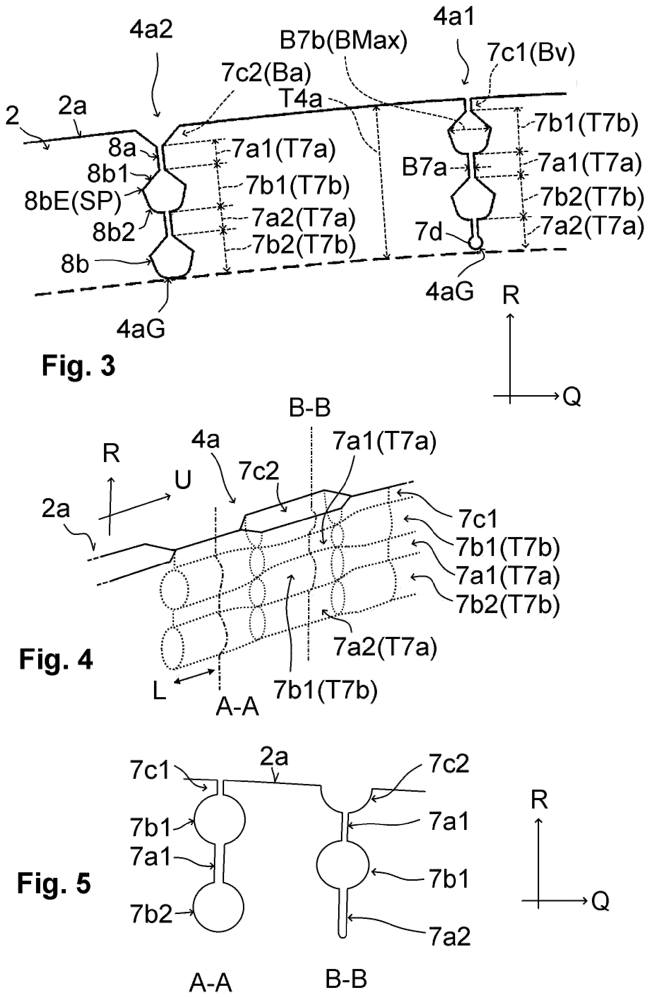

Gemäß der Erfindung sind die Umfangsrillen 4a nicht wie üblich mit einem in Umfangsrichtung U gleichverlaufenden u-förmigen Querschnitt ausgeführt, sondern weisen jeweils eine Kombination aus zumindest zwei verengten Bereichen Bv und mindestens zwei aufgeweiteten Bereichen Ba auf, die ausgehend von einer Laufstreifenoberfläche 2a nach radial innen über die gesamte Profiltiefe T3 abwechselnd bzw. alternierend verteilt sind. Bei sämtlichen aufgeweiteten Bereichen Ba liegt gegenüber dem/den jeweils angrenzenden verengten Bereich(en) Bv eine Aufweitung der jeweiligen Umfangsrille 4a in axialer Richtung bzw. in Querrichtung Q vor. Die Verteilung der jeweiligen Bereiche Ba, Bv kann in einer ersten Ausführungsform gemäß Fig. 2 und 3 und in einer zweiten Ausführungsform gemäß Fig. 4 und 5 gewählt werden.

So kann gemäß Fig. 2 und Fig. 3 vorgesehen sein, dass in den axial inneren Umfangsrillen 4a1 ausgehend von der Laufstreifenoberfläche 2a zunächst ein verengter Übergangsabschnitt 7c1 (verengter Bereich Bv) nach radial innen verläuft, der anschließend in einen ersten aufgeweitete Hauptabschnitt 7b1 übergeht. Der erste aufgeweitete Hauptabschnitt 7b1 geht dann nach radial innen verlaufend in einen ersten verengten Hauptabschnitt 7a1 über, der wiederum in einen zweiten aufgeweiteten Hauptabschnitt 7b2 mündet. Radial innen wird diese axial innere Umfangsrille 4a1 durch einen zweiten verengten Hauptabschnitt 7a2 nach unten hin abgeschlossen, wobei der zweite verengte Hauptabschnitt 7a2 an seiner radialen Unterseite, die einen Rillengrund 4aG der axial inneren Umfangsrille 4a1 bildet, in eine Entform-Ausbuchtung 7d übergeht, die beim Entformen ein radial innenseitiges Aufreißen der axial inneren Umfangsrille 4a1 verhindern soll.

Demgegenüber weist die schulterseitige bzw. axial äußere Umfangsrille 4a2 ausgehend von der Laufstreifenoberfläche 2a zunächst einen trichterförmig aufgeweiteten Übergangsabschnitt 7c2 (aufgeweiteter Bereich Ba) auf. Dieser geht radial nach innen verlaufend in einen ersten verengten Hauptabschnitt 7a1 über, der wiederum in einen ersten aufgeweiteten Hauptabschnitt 7b1 mündet. Anschließend folgen in radialer Richtung R ein zweiter verengter Hauptabschnitt 7a2 und ein zweiter aufgeweiteter Hauptabschnitt 7b2, mit dem diese axial äußere Umfangsrille 4a2 radial innenseitig an dem Rillengrund 4aG abschließt. Eine Entform-Ausbuchtung 7c ist an dem Rillengrund 4aG dieser axial äußeren Umfangsrille 4a2 nicht nötig, da ein schadfreies Entformen bereits durch den zweiten aufgeweiteten Hauptabschnitt 7b2 gewährleistet wird.

In diesen beiden axial nebeneinanderliegenden Umfangsrillen 4a; 4a1, 4a2 liegen also die verengten Hauptabschnitte 7a; 7a1, 7a2 (verengte Bereiche Bv) und die aufgeweiteten Hauptabschnitte 7b; 7b1, 7b2 (aufgeweitete Bereiche Ba) in radialer Richtung R versetzt zueinander. Ausgehend von der Laufstreifenoberfläche 2a ragt die jeweilige Umfangsrille 4a; 4a1, 4a2 dabei auch über unterschiedliche Übergangsabschnitte 7c1, 7c2 nach radial innen in den Laufstreifen 2 hinein. Die Übergangsabschnitte 7c1, 7c2 sind dabei gegenüber den radial weiter innen liegenden Hauptabschnitten 7a, 7b in radialer Richtung R kürzer ausgeführt, wobei sie den bleibenden Abstand zur Laufstreifenoberfläche 2a überbrücken.

Wie in Fig. 1 angedeutet, sind die radialen Verteilungen der jeweiligen Hauptabschnitte 7a, 7b in den beiden axial inneren Umfangsrillen 4a1 identisch zueinander und auch die radialen Verteilungen der Hauptabschnitte 7a, 7b in den beiden schulterseitigen bzw. axial äußeren Umfangsrillen 4a2 sind identisch zueinander, so dass eine zum Reifenzenit symmetrische Anordnung vorliegt. Daher steht je nach Abriebstufe bzw. Abnutzung des Fahrzeugreifens 1 entweder in den beiden axial inneren Umfangsrillen 4a1 oder in den beiden axial äußeren Umfangsrillen 4a2 ein aufgeweiteter Hauptabschnitt 7b; 7b1, 7b2 für eine Vergrößerung des Volumens an Hohlräumen (Void, Negativanteil des Profils) im Profil 3 zur Verfügung. Gemäß weiterer Ausführungsformen kann auch eine andere Symmetrie oder eine andere radial versetzte Verteilung der jeweiligen Hauptabschnitte 7a, 7b in den Umfangsrillen 4a; 4a1, 4a2 vorgesehen sein.

In jeglichen Ausführungen weist der jeweilige verengte Hauptabschnitt 7a eine verengte Breite B7a, die im Querschnitt zwischen verengten Flankenbereichen 8a des jeweiligen verengten Hauptabschnittes 7a gemessen wird, von zwischen 1 mm bis 3 mm auf. Auch der verengte Übergangsabschnitt 7c1 weist diese verengte Breite B7a auf. Eine verengte Tiefe T7a des jeweiligen verengten Hauptabschnittes 7a beträgt zwischen 3mm und 8mm. Vorzugsweise sind dabei der Verlauf der verengten Breite B7a und/oder die verengte Tiefe T7a für die verengten Hauptabschnitte 7a innerhalb einer Umfangsrille 4a, insbesondere aber über alle Umfangsrillen 4a in dem Laufstreifen 2, in etwa identisch. Die verengte Tiefe T7a eines verengten Hauptabschnittes 7a kann je nach Anzahl an verengten Hauptabschnitten 7a innerhalb einer Umfangsrille 4a beispielsweise zwischen 10% und 20% einer Gesamttiefe T4a der jeweiligen Umfangsrille 4a (im Neuzustand des Fahrzeugreifens 1) gewählt werden, wobei die Gesamttiefe T4a je nach Fahrzeugreifen 1 zwischen 10mm und 25mm beträgt.

Bezüglich der aufgeweiteten Hauptabschnitte 7b werden diese im Querschnitt jeweils durch aufgeweitete Flankenbereiche 8b begrenzt, wobei die verengten Flankenbereiche 8a des verengten Hauptabschnittes 7a unmittelbar in die aufgeweiteten Flankenbereiche 8b übergehen. Die aufgeweiteten Flankenbereiche 8b werden gebildet durch zwei gegenüber der radialen Richtung R angewinkelte Deckenflanken 8b1, die den jeweiligen aufgeweiteten Hauptabschnitt 7b nach oben bzw. radial außen hin begrenzen, und zwei abgerundete Seitenflanken 8b2, die den jeweiligen aufgeweiteten Hauptabschnitt 7b zur Seite hin (in Querrichtung Q) begrenzen.

Die beiden Deckenflanken 8b1 verlaufen ausgehend von den verengten Flankenbereichen 8a des jeweils radial darüberliegenden verengten Hauptabschnittes 7b jeweils unter einem stumpfen Außenwinkel zu diesen, wobei der Außenwinkel zwischen 95° und 135°, vorzugsweise 105° beträgt. Eine aufgeweitete Breite B7b des jeweiligen aufgeweiteten Hauptabschnittes 7b nimmt in der dargestellten Ausführungsform an äußeren Enden 8bE der beiden Deckenflanken 8b1, die innerhalb des aufgeweiteten Hauptabschnittes 7b jeweils Scheitelpunkte SP bilden, im Querschnitt einen maximalen Wert BMax an, der zwischen 5mm und 10mm, insbesondere zwischen 6mm und 8mm liegt. Die zwei Seitenflanken 8b2 schließen sich unmittelbar an die äußeren Enden 8bE der beiden Deckenflanken 8b1 an und verlaufen dann unter Verringerung ihres gegenseitigen Abstandes unter einem Winkel von zwischen 5° und 25°, vorzugsweise von 10° bis 20°, zur radialen Richtung R radial weiter nach unten bis die Seitenflanken 8b2 in den radial darunterliegenden verengten Hauptabschnitt 7a oder in den Rillengrund 4aG übergehen.

Die aufgeweiteten Flankenbereiche 8b können auch einen anderen Verlauf aufweisen, beispielsweise auch einen abgerundeten Verlauf, bei dem die aufgeweitete Breite B7b ausgehend von dem verengten Flankenbereich 8a zunächst auf den oben genannten maximalen Wert BMax an den entsprechend ausgeführten Scheitelpunkten SP ansteigt, um dann radial innenseitig bzw. unterseitig wieder abzufallen. Mit diesem oder mit einem vergleichbaren radialen Verlauf der aufgeweiteten Flankenbereiche 8b wird im jeweiligen aufgeweiteten Hauptabschnitt 7b gegenüber dem darunter oder darüberliegenden verengten Hauptabschnitt 7a eine im Querschnitt axiale Aufweitung ausgebildet.

Eine aufgeweitete Tiefe T7b des aufgeweiteten Hauptabschnittes 7b beträgt zwischen 5mm und 13mm. Vorzugsweise sind dabei der Verlauf der aufgeweiteten Breite B7b und/oder die aufgeweitete Tiefe T7b für die aufgeweiteten Hauptabschnitte 7a innerhalb einer Umfangsrille 4a, insbesondere aber über alle Umfangsrillen 4a in dem Laufstreifen 2, in etwa identisch. Die aufgeweitete Tiefe T7b eines aufgeweiteten Hauptabschnittes 7b kann je nach Anzahl an aufgeweiteten Hauptabschnitten 7b innerhalb einer Umfangsrille 4a beispielsweise zwischen 25% und 35% der Gesamttiefe T4a der jeweiligen Umfangsrille 4a (im Neuzustand des Fahrzeugreifens 1) gewählt werden. Die verengten Tiefen T7a der verengten Hauptabschnitte 7a sind also innerhalb einer Umfangsrille 4a in Summe kleiner als 50% der Gesamttiefe T4a der jeweiligen Umfangsrille 4a, während die Summe der aufgeweiteten Tiefen T7b der aufgeweiteten Hauptabschnitte 7b größer gleich 50% der Gesamttiefe T4a ist. Ist innerhalb der jeweiligen Umfangsrille 4a auch ein aufgeweiteter Übergangsabschnitt 7c2 vorhanden, so beträgt die Ausdehnung der aufgeweiteten Bereiche Ba (aufgeweiteter Übergangsabschnitt 7c2 und aufgeweitete(r) Hauptabschnitt(e) 7b) in radialer Richtung R innerhalb einer Umfangsrille 4a in Summe gleich oder mehr als 50% der Gesamttiefe T4a der jeweiligen Umfangsrille 4a.

Gemäß der zweiten Ausführungsform in den Fig. 4 und 5 ist vorgesehen, dass die einzelnen Hauptabschnitte 7a, 7b innerhalb einer Umfangsrille 4a nicht nur in radialer Richtung R alternieren bzw. sich abwechseln, wie zu der ersten Ausführungsform bereits beschrieben, sondern sich verengte Hauptabschnitte 7a und aufgeweitete Hauptabschnitte 7a auch in Umfangsrichtung U mit einer Abschnittslänge L (in Umfangsrichtung U) abwechseln. Die Abschnittslänge L kann beispielsweise zwischen 2cm und 3cm betragen. Entlang der Umfangsrichtung U wird die jeweilige Umfangsrille 4a also in gleichbleibender Höhe (in radialer Richtung R) mit der Abstandslänge L alternierend enger und wieder weiter. Dies führt automatisch auch dazu, dass die Umfangsrille 4a ausgehend von der Laufstreifenoberfläche 2a entlang der Umfangsrichtung U abwechselnd beginnend mit einem verengten Übergangsabschnitt 7c1 und einem aufgeweiteten Übergangsabschnitt 7c2 radial nach innen in den Laufstreifen 2 hineinragt.

Dadurch ergeben sich an unterschiedlichen Umfangspositionen der jeweiligen Umfangsrille 4a die in Fig. 5 dargestellten Querschnitte, die den Querschnitten für axial nebeneinanderliegende Umfangsrillen 4a; 4a1, 4a2 gemäß der ersten Ausführungsform zumindest ähnlich sind. In dieser Ausführungsform verläuft die radiale Verteilung der einzelnen Hauptabschnitte 7a, 7b also nicht (nur) zwischen axial nebeneinanderliegenden Umfangsrillen 4a; 4a1, 4a2 versetzt zueinander, sondern auch innerhalb einer Umfangsrille 4a entlang der Umfangsrichtung U versetzt zueinander. Dabei kann auch vorgesehen sein, dass diese radiale Versetzung innerhalb einer Umfangsrille 4a ergänzend auch zwischen axial benachbarten Umfangsrillen 4a; 4a1, 4a2 besteht. Axial benachbarte Umfangsrillen 4a sind also in Umfangsrichtung U so gegeneinander verdreht, dass ein verengter Hauptabschnitt 7a in der einen Umfangsrille 4a in Querrichtung Q gesehen auf derselben Höhe (in radialer Richtung R) neben einem aufgeweiteten Hauptabschnitt 7b in der axial benachbarten Umfangsrille 4a liegt, wie auch anhand der Fig. 3 in dem ersten Ausführungsbeispiel beschrieben.

### Bezugszeichenliste

- 1: Fahrzeugreifen
- 2: Laufstreifen
- 2a: Laufstreifenoberfläche
- 3: Profil
- 4a: Umfangsrille
- 4a1: axial innere Umfangsrille
- 4a2: axial äußere Umfangsrille
- 4aG: Rillengrund
- 4b: Querrille
- 5: Seitenwand
- 6: Wulstbereich
- 7a: verengter Hauptabschnitt
- 7a1: erster verengter Hauptabschnitt
- 7a2: zweiter verengter Hauptabschnitt
- 7b: aufgeweiteter Hauptabschnitt
- 7b1: erster aufgeweiteter Hauptabschnitt
- 7b2: zweiter aufgeweiteter Hauptabschnitt
- 7c1: verengter Übergangsabschnitt
- 7c2: aufgeweiteter Übergangsabschnitt
- 7d: Entform-Ausbuchtung
- 8a: verengter Flankenbereich des verengten Hauptabschnittes 7a
- 8b: aufgeweiteter Flankenbereich des aufgeweiteten Hauptabschnittes 7b
- 8b1: Deckenflanke des aufgeweiteten Flankenbereiches 8b
- 8b2: Seitenflanke des aufgeweiteten Flankenbereiches 8b
- 8bE: äußere Enden der Deckenflanke 8b1
- B7a: verengte Breite
- B7b: aufgeweitete Breite
- Ba: aufgeweiteter Bereich
- BMax: maximalen Wert der aufgeweiteten Breite B7b
- Bv: verengter Bereich
- L: Abschnittslänge
- Q: Querrichtung
- R: radiale Richtung
- SP: Scheitelpunkt
- T3: Profiltiefe
- T4a: Gesamttiefe der Umfangsrille 4
- T7a: verengte Tiefe
- T7b: aufgeweitete Tiefe
- U: Umfangsrichtung

## Patentansprüche

1. Fahrzeugreifen (1), insbesondere für ein Nutzfahrzeug, mit einem Laufstreifen (2) mit einem eingebrachten Profil (3), Seitenwänden (5) und Wulstbereichen (6), wobei das Profil (3) durch Umfangsrillen (4a) gebildet wird, die in Umfangsrichtung (U) um den Fahrzeugreifen (1) verlaufen und ausgehend von einer Laufstreifenoberfläche (2a) in radialer Richtung (R) über eine Profiltiefe (T3) in den Laufstreifen (2) hineinragen,
**dadurch gekennzeichnet, dass**
die Umfangsrillen (4a) jeweils mindestens zwei verengte Bereiche (Bv) und mindestens zwei aufgeweitete Bereiche (Ba) aufweisen, die sich innerhalb der jeweiligen Umfangsrille (4a) in radialer Richtung (R) über die Profiltiefe (T3) abwechseln, so dass sich die jeweilige Umfangsrille (4a) über ihren gesamten Umfang in radialer Richtung (R) alternierend in den verengten Bereichen (Bv) in Querrichtung (Q) verengt und in den aufgeweiteten Bereichen (Ba) in Querrichtung (Q) aufweitet.

2. Fahrzeugreifen (1) nach Anspruch 1,
**dadurch gekennzeichnet, dass**
sich die verengten Bereiche (Bv) und die aufgeweiteten Bereiche (Ba) innerhalb der jeweiligen Umfangsrille (4a) auch in Umfangsrichtung (U) abwechseln, so dass sich die jeweilige Umfangsrille (4a) in Umfangsrichtung (U) mit einer Abschnittslänge (L) alternierend in den verengten Bereichen (Bv) in Querrichtung (Q) verengt und in den aufgeweiteten Bereichen (Ba) in Querrichtung (Q) aufweitet.

3. Fahrzeugreifen (1) nach Anspruch 1 oder 2,
**dadurch gekennzeichnet, dass**
die Abstandslänge (L) zwischen den sich abwechselnden verengten Bereichen (Bv) und den aufgeweiteten Bereichen (Ba) zwischen 2cm und 3cm beträgt, wobei die Abstandslänge (L) über den Umfang der Umfangsrille (4a) konstant ist oder variiert.

4. Fahrzeugreifen (1) nach einem der vorhergehenden Ansprüche,
**dadurch gekennzeichnet, dass**
die verengten Bereiche (Bv) der jeweiligen Umfangsrille (4a) durch verengte Hauptabschnitte (7a) gebildet werden, die jeweils in Querrichtung (Q) über eine verengte Breite (B7a) und in radialer Richtung (R) über eine verengte Tiefe (T7a) ausgedehnt sind, wobei
- die verengte Breite (B7a) zwischen 1 mm bis 3 mm beträgt, und/oder
- die verengte Tiefe (T7a) zwischen 3mm und 8mm beträgt.

5. Fahrzeugreifen (1) nach Anspruch 4,
**dadurch gekennzeichnet, dass**
die verengten Breiten (B7a) jedes verengten Hauptabschnittes (7a) innerhalb einer Umfangsrille (4a) jeweils identisch sind, und/oder die verengten Tiefen (T7a) jedes verengten Hauptabschnittes (7a) innerhalb einer Umfangsrille (4a) jeweils identisch sind.

6. Fahrzeugreifen (1) nach Anspruch 4 oder 5,
**dadurch gekennzeichnet, dass**
die verengten Hauptabschnitte (7a) innerhalb derselben Umfangsrille (4a) miteinander fluchten.

7. Fahrzeugreifen (1) nach einem der Ansprüche 4 bis 6,
**dadurch gekennzeichnet, dass**
die verengten Bereiche (Bv) zumindest einiger Umfangsrillen (4a) ferner durch verengte Übergangsabschnitte (7c1) gebildet werden, über die die jeweilige Umfangsrille (4a) ausgehend von der Laufstreifenoberfläche (2a) radial nach innen in den Laufstreifen (2) hineinragt, wobei die verengten Übergangsabschnitte (7c1) in radialer Richtung (R) eine geringere Ausdehnung aufweisen als die verengten Hauptabschnitte (7a), und wobei die verengten Übergangsabschnitte (7c1) vorzugsweise mit den verengten Hauptabschnitten (7a) innerhalb derselben Umfangsrille (4a) fluchten.

8. Fahrzeugreifen (1) nach einem der vorhergehenden Ansprüche,
**dadurch gekennzeichnet, dass**
die aufgeweiteten Bereiche (Ba) der jeweiligen Umfangsrille (4a) durch aufgeweitete Hauptabschnitte (7b) gebildet werden, die jeweils in Querrichtung (Q) über eine aufgeweitete Breite (B7b) und in radialer Richtung (R) über eine aufgeweitete Tiefe (T7b) ausgedehnt sind, wobei
- die aufgeweitete Breite (B7b) an mindestens einem Scheitelpunkt (SP) innerhalb des aufgeweiteten Hauptabschnittes (7b) einen maximalen Wert (BMax) annimmt, der zwischen 5mm und 10mm, insbesondere zwischen 6mm und 8mm beträgt, und/oder
- die aufgeweitete Tiefe (T7b) zwischen 5mm und 13mm beträgt.

9. Fahrzeugreifen (1) nach Anspruch 8,
**dadurch gekennzeichnet, dass**
die aufgeweiteten Breiten (B7b) jedes aufgeweiteten Hauptabschnittes (7b) innerhalb einer Umfangsrille (4a) jeweils identisch sind, und/oder die aufgeweiteten Tiefen (T7b) jedes aufgeweiteten Hauptabschnittes (7b) innerhalb einer Umfangsrille (4a) jeweils identisch sind.

10. Fahrzeugreifen (1) nach Anspruch 8 oder 9,
**dadurch gekennzeichnet, dass**
die aufgeweiteten Bereiche (Ba) zumindest einiger Umfangsrillen (4a) ferner durch aufgeweitete Übergangsabschnitte (7c2) gebildet werden, beispielsweise durch trichterförmig aufgeweitete Übergangsabschnitte (7c2), über die die jeweilige Umfangsrille (4a) ausgehend von der Laufstreifenoberfläche (2a) radial nach innen in den Laufstreifen (2) hineinragt, wobei die aufgeweiteten Übergangsabschnitte (7c2) in radialer Richtung (R) eine geringere Ausdehnung aufweisen als die aufgeweiteten Hauptabschnitte (7b).

11. Fahrzeugreifen (1) nach einem der vorhergehenden Ansprüche,
**dadurch gekennzeichnet, dass**
die Ausdehnung in radialer Richtung (R) der aufgeweiteten Bereiche (Ba) innerhalb einer Umfangsrille (4a) in Summe mehr als 50% einer Gesamttiefe (T4a) der jeweiligen Umfangsrille (4a) betragen.

12. Fahrzeugreifen (1) nach einem der vorhergehenden Ansprüche,
**dadurch gekennzeichnet, dass**
der Fahrzeugreifen (1) mindestens vier Umfangsrillen (4a) aufweist, insbesondere mindestens zwei axial innere Umfangsrillen (4a1) und mindestens zwei axial äußere Umfangsrillen (4a2), wobei die verengten Bereiche (Bv) und die aufgeweiteten Bereiche (Ba) zwischen zumindest einigen der in Querrichtung (Q) benachbarten Umfangsrillen (4a), insbesondere zwischen einer der axial inneren Umfangsrillen (4a1) und einer der axial äußeren Umfangsrillen (4a2), in radialer Richtung (R) versetzt zueinander liegen.

13. Fahrzeugreifen (1) nach Anspruch 12,
**dadurch gekennzeichnet, dass**
die inneren Umfangsrillen (4a1) jeweils in radialer Richtung (R) eine identische alternierende Verteilung der verengten Bereiche (Bv) und der aufgeweiteten Bereiche (Ba) aufweisen, und/oder die äußeren Umfangsrillen (4a2) jeweils in radialer Richtung (R) eine identische alternierende Verteilung der verengten Bereiche (Bv) und der aufgeweiteten Bereiche (Ba) aufweisen.
